# EUROPÄISCHE PATENTSCHRIFT

(11) **EP 1 947 031 B1**
(45) Veröffentlichungstag und Bekanntmachung des Hinweises auf die Patenterteilung: **28.12.2011**
(21) Anmeldenummer: 08000148.0
(22) Anmeldetag: 07.01.2008
(51) Int. Cl.: B65D 88/00, B65D 88/12, A01D 41/12

(54) **Erweiterungsvorrichtung für einen Schüttgutbehälter**
Extension device for a bulk material container
Dispositif d'agrandissement pour un récipient de matières en vrac

(30) Priorität: 18.01.2007 DE 102007003653
(43) Veröffentlichungstag der Anmeldung: 23.07.2008
(73) Patentinhaber: CLAAS Selbstfahrende Erntemaschinen, 33428 Harsewinkel (DE)
(72) Erfinder: Mohr, Jan-Hendrik, 48361 Beelen (DE); Claes, Ulrich, 49201 Dissen (DE); Vieregge, Christopher, 32694 Dörentrup (DE)
(74) Vertreter: Heuer, Wilhelm

(56) Entgegenhaltungen:
- EP-A- 1 544 132
- DE-A1- 3 822 269
- DE-A1-102004 007 673
- US-A- 6 074 298
- US-A1- 2006 220 266

## Beschreibung

Die Erfindung betrifft eine Erweiterungsvorrichtung, nach dem Oberbegriff des Anspruchs 1, zur Erweiterung des Fassungsvermögens eines Korntanks eines Mähdreschers.

Der Korntank eines Mähdreschers ist häufig mit einem Korntankaufsatz versehen, der mehrere an einen Rahmen angelenkte, ausschwenkbare Flügel umfasst. Ein solcher Korntankaufsatz ist zum Beispiel aus DE 10 2004 007 673 A1 bekannt. Während sich der Mähdrescher auf einer Straße bewegt, sind die Flügel über die Öffnung des Korntankes eingeschwenkt und liegen flach auf diesem auf, so dass eine im Straßenverkehr zulässige Gesamthöhe des Mähdreschers nicht überschritten wird. Beim Betrieb auf dem Feld sind die Flügel in einer ausgeschwenkten Stellung, in der sie sich vom Rahmen aus jeweils schräg nach außen und nach oben erstrecken. So vergrößern sie das Volumen des Korntankes, so dass dieser in größeren Intervallen entleert werden kann.

Um die Intervalle zwischen zwei Entleerungen so groß wie möglich zu machen, ist es auf den ersten Blick wünschenswert, einen Aufsatz mit möglichst großen, weit ausladenden Flügeln zu bauen. Dabei ergibt sich jedoch das Problem, dass die Breite der Flügel, d.h. ihre Abmessung quer zur Schwenkachse, begrenzt ist durch die Breite der Korntanköffnung, über der sie in geschlossener Stellung übereinandergelegt sein müssen. Außerdem verlagert sich, wenn im Laufe eines Erntevorganges die Erweiterungsvorrichtung mit Korn gefüllt wird, der Schwerpunkt des Mähdreschers immer weiter nach oben, so dass seine Standfestigkeit auf geneigtem Untergrund abnimmt. Eine Erweiterungsvorrichtung, die zu weit nach oben über den Korntank hinausgreift, beeinträchtigt daher die Betriebssicherheit des Mähdreschers.

Zwar ließe sich die Bauhöhe einer Erweiterungsvorrichtung in ausgeschwenktem Zustand verringern, indem die Neigung der Flügel in der ausgeschwenkten Stellung verringert wird, doch geht dies offensichtlich auf Kosten des Fassungsvermögens.

Aus US 6 074 298 A ist ein Korntankaufsatz bekannt, dessen Flügel in der ausgeschwenkten Stellung konkav sind. Die Konkavität ist gebildet durch einen Knick zwischen einem schräg ansteigenden Hauptteil des Flügels und einem schmalen horizontalen Randstreifen, der den Hauptteil mit einem Scharnier verbindet und auf einer horizontalen oberen Randfläche des Korntanks aufliegt. Die horizontale Fläche erstreckt sich auch an der Innenseite des Scharniers, so dass beim Entleeren des Korntanks Korn darauf liegen bleibt und das Zusammenlegen des Aufsatzes behindert. Der Randstreifen trägt zum Fassungsvermögen des Aufsatzes allenfalls marginal bei.

Aufgabe der vorliegenden Erfindung ist daher, eine Erweiterungsvorrichtung für einen Korntank zu schaffen, die eine geringe Bauhöhe mit hohem Fassungsvermögen kombiniert und die nach Entleeren des Schüttgutbehälters leicht zusammenlegbar ist.

Die Aufgabe wird erfindungsgemäß durch eine Erweiterungsvorrichtung mit den Merkmalen des Anspruchs 1 gelöst

Die Neigung der Innenfläche des Flügels in der ausgeschwenkten Stellung kann lokal niedriger sein als der Schüttkegelwinkel des Schüttgutes, für das der Behälter vorgesehen ist. Eine besonders große Volumensteigerung ist erreichbar, wenn die Innenfläche des Flügels in der ausgeschwenkten Stellung lokal horizontal ausgerichtet ist.

Um einerseits im ausgeschwenkten Zustand die konkave Gestalt zu realisieren und andererseits die Flügel platzsparend einschwenken zu können, ist es zweckmäßig, wenn der Flügel schwenkbar miteinander verbundene Segmente umfasst.

Insbesondere wenn die Neigung der Innenfläche des Flügels lokal niedriger als der Schüttkegelwinkel ist, ist es zweckmäßig, Hilfsmittel vorzusehen, die bei der Entleerung des Schüttgutbehälters auch die Beseitigung des Schüttgutes von dem Flügel ermöglichen. Im einfachsten Fall kann es sich dabei um an sich bekannte Schwenkantriebsmittel des Flügels handeln, die kräftig genug ausgelegt sind, um den Flügel auch im mit Schüttgut beladenen Zustand einzuschwenken, so dass darauf befindliches Schüttgut in Richtung des Schüttgutbehälters abrutscht.

Eine weitere Lösung der Aufgabe ist eine Erweiterungsvorrichtung mit den Merkmalen des Anspruchs 6. Bei dieser Erweiterungsvorrichtung kann durch - ggf. wiederholtes - Bewegen der Membran darauf befindliches Schüttgut in Bewegung versetzt werden, so dass es zum Schüttgutbehälter hin abrutscht.

Die Bewegung kann angetrieben sein durch ein an der Membran angreifendes Zugmittel zum Straffziehen der Membran. Alternativ kann ein Zwischenraum zwischen der Membran und der Innenfläche des Flügels mit Druckgas beaufschlagbar sein, um die Membran von dem Flügel abzuheben.

Des Weiteren können Mittel zum Fluidisieren des Schüttgutes an dem Flügel angeordnet sein. Als Mittel zum Fluidisieren kommen zum Beispiel Rüttler oder Klopfer in Betracht, die insbesondere pneumatisch oder elektrisch angetrieben sein können.

Einer bevorzugten Ausgestaltung zufolge sind Austrittsöffnungen für ein Druckgas an der Innenfläche des Flügels verteilt. Diese Austrittsöffnungen können ein Mittel zum Fluidisieren darstellen, oder sie können zur Druckgasbeaufschlagung des Zwischenraumes zwischen Flügel und Membran dienen. Wenn eine Membran vorhanden ist, können Austrittsöffnungen für das Druckgas auch in der Membran selbst vorgesehen sein.

Als ein weiteres Hilfsmittel zum Beseitigen des Schüttgutes von dem Flügel kann an der Innenfläche wenigstens eine getrennt von dem Flügel schwenkbare Platte vorgesehen sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen Mähdrescher mit einer erfindungsgemäßen Vorrichtung zur Vergrößerung des Volumens von dessen Korntank;
- Fig. 2: eine perspektivische Ansicht der erfindungsgemäßen Erweiterungsvorrichtung in ausgeschwenkter Stellung gemäß einer ersten Ausgestaltung;
- Fig. 3: eine perspektivische Ansicht einer Erweiterungsvorrichtung in ausgeschwenkter Stellung gemäß einer zweiten Ausgestaltung;
- Fig. 4: eine perspektivische Ansicht der Erweiterungsvorrichtung aus Fig. 3 in teilweise eingeschwenkter Stellung;
- Fig. 5: einen schematischen Halbschnitt durch die Erweiterungsvorrichtung, die die Wirkungsweise der Vorrichtung veranschaulicht;
- Fig. 6: einen zu Fig. 5 analogen Halbschnitt, der eine erste Variante von Mitteln zum Befreien eines Flügels der Erweiterung von Schüttgut zeigt;
- Fig. 7: einen schematischen Halbschnitt, der eine zweite Variante von Mitteln zum Befreien des Flügels von Schüttgut zeigt;
- Fig. 8: einen Halbschnitt, der eine dritte Variante dieser Mittel zeigt;
- Fig. 9: einen Halbschnitt, der eine vierte Variante solcher Mittel zeigt; und
- Fig. 10: einen Halbschnitt, der eine fünfte Variante dieser Mittel zeigt.

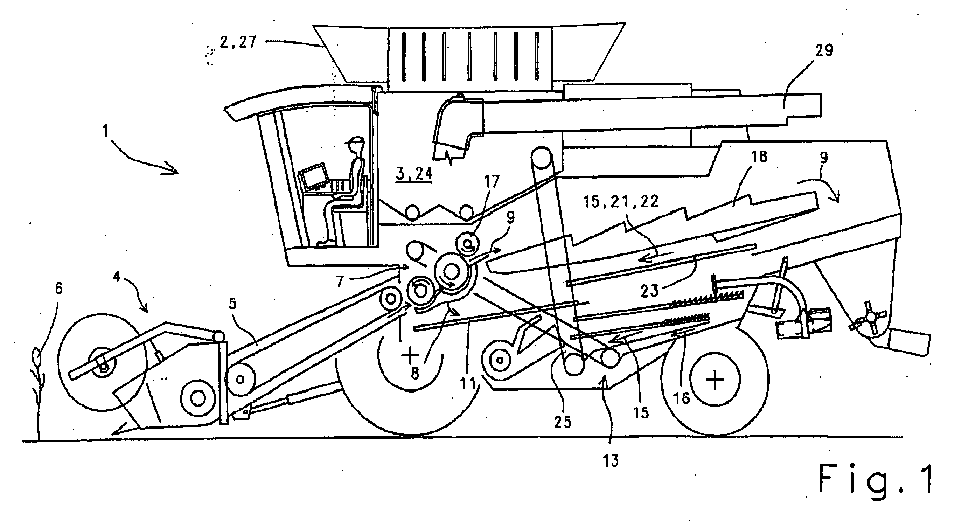

In Fig. 1 ist ein schematischer Längsschnitt durch einen Mähdrescher 1 mit einer erfindungsgemäßen Vorrichtung 2 zur Vergrößerung des Volumens eines Korntankes 3 dargestellt. Der Mähdrescher ist frontseitig mit einem Schneidwerk 4 ausgestattet, das an einem Schrägförderer 5 angeordnet ist. Mit dem Schneidwerk 4 nimmt der Mähdrescher 1 das Erntegut 6 auf und führt es dem Schrägförderer 5 zu. Der Schrägförderer 5 übergibt das Erntegut 6 an ein nachgeschaltetes Dreschwerk 7. Das Dreschwerk 7 bereitet das Erntegut 6 auf, wobei es in ein Korn-Spreu-Gemisch 8 und einen aus ausgedroschenen Halmen bestehenden Gutstrom 9 geteilt wird. Das Korn-Spreu-Gemisch 8 wird über einen Vorbereitungsboden 11 direkt zu einer Reinigungseinrichtung 13 gefördert, die die Körner 15 von den Nichtkornbestandteilen 16, das heißt von Halm- und Spreuteilen trennt.

Hinter dem Dreschwerk 7 ist eine entgegen dem Uhrzeigersinn rotierende Wendetrommel 17 angeordnet, die den aus ausgedroschenen Halmen bestehenden Gutstrom 9 auf einen Hordenschüttler 18 fördert. Der Hordenschüttler 18 trennt noch im Gutstrom 9 vorhandene Körner 15, Kurzstroh 21 und Spreu 22, die über einen Rücklaufboden ebenfalls in die Reinigungseinrichtung 13 gelangen. Die von der Reinigungseinrichtung 13 abgetrennten Körner 15 fördert ein Kornelevator 25 in einen Behälter 24 am Mähdrescher, den sogenannten Korntank 3. Bei Bedarf werden die Körner 15 mit einem Korntankentleerförderer 29 aus dem Korntank 3 auf einen Transportwagen (nicht dargestellt) umgeladen.

Um die Häufigkeit, mit der solche Umladevorgänge erforderlich werden, zu minimieren, ist auf der Oberseite des Korntankes 3 die erfindungsgemäße Erweiterungsvorrichtung 2 in Form eines Korntankaufsatzes 27 angeordnet. Der Korntankaufsatz 27 ist in einer ausgeschwenkten Stellung gezeigt, in der er das Volumen des Korntankes 3 vergrößert.

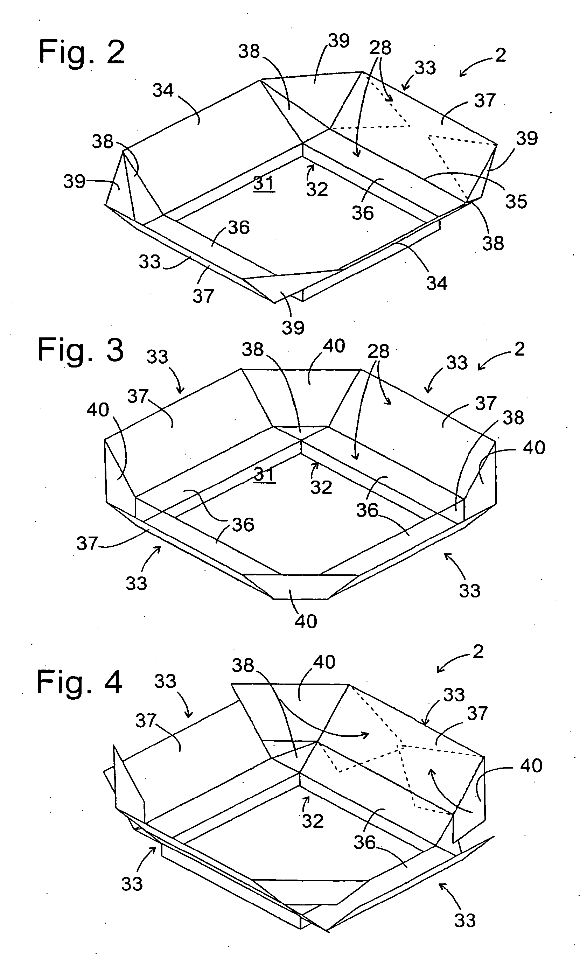

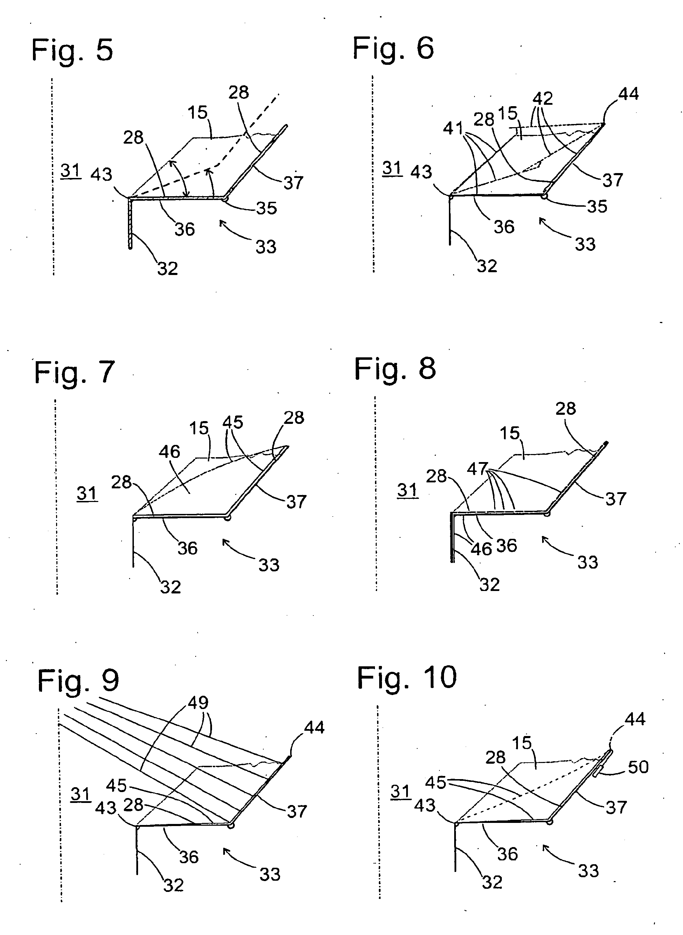

Fig. 2 zeigt eine perspektivische Ansicht einer ersten Ausgestaltung der erfindungsgemäßen Erweiterungsvorrichtung 2. Ein aus vier vertikalen Wänden gebildeter rechteckiger Rahmen 32 der Erweiterungsvorrichtung kann integraler Bestandteil des Korntankes 3 sein oder auf einen oberen Rand des Korntankes 3 aufgesetzt und daran befestigt sein, d.h. ein von der Erweiterungsvorrichtung 2 in seitlicher Richtung begrenzter Innenraum 31 ist nach oben hin offen und schließt nach unten hin an den in Fig. 2 nicht dargestellten Korntank 3 an. An die obere Kante einer jeden der vier Wände des Rahmens 32 ist ein Flügel 33, 33, 34, 34 schwenkbar angelenkt. Die Flügel 34 sind einteilige, ebene, rechteckige oder trapezförmige Platten. Die Flügel 33 bestehen jeweils aus zwei miteinander entlang einer Linie 35 gelenkig verbundenen Segmenten, einem in der ausgeschwenkten Stellung in etwa horizontalen inneren Segment 36 und einem äußeren Segment 37. Indem die beiden Segmente 36, 37 an der Linie 35 im Querschnitt einen stumpfen Winkel aufspannen, wird eine konkave Innenfläche 28 (siehe auch Fig. 5) des Flügels 33 erhalten, durch die das Fassungsvermögen der Erweiterungsvorrichtung 2 größer ist als das einer herkömmlichen Erweiterungsvorrichtung mit einteiligen, planaren Flügeln.

Vier dreieckige Platten 38 sind jeweils mit einem der inneren Segmente 36 und einem der Flügel 34 durch Scharniere gelenkig verbunden. Weitere dreieckige Platten 39 sind jeweils durch ein Scharnier mit einem der äußeren Segmente 37 verbunden und haben eine Kante, die die benachbarte Platte 38 berührt. Um den Kontaktbereich zwischen den Platten 38, 39 korndicht zu machen, können die Platten 39 an ihrer die Platte 38 berührenden Kante mit einer flexiblen, auf der Platte 38 aufliegenden Lippe, zum Beispiel aus Gummi, versehen sein.

Die Flügel 34 haben eine Neigung, die größer ist als die Schüttkegelneigung des Kornes, so dass wenn der Korntank entleert wird und dabei Korn aus der Erweiterungsvorrichtung 3 durch die Öffnung des Rahmens 32 hindurch in den Korntank 3 rutscht, auf den Flügeln 34 praktisch kein Korn zurückbleibt. Auf den im Wesentlichen horizontalen inneren Segmenten 36 der Flügel 33 bleibt jedoch Korn in erheblicher Menge zurück. Um auch dieses in den Korntank 3 zu befördern, werden die Flügel 33, wie durch eine gestrichelte Linie in dem schematischen Schnitt der Fig. 5 schematisch angedeutet, um ihre sie mit dem Rahmen 32 verbindende innere Kante 43 nach oben und nach innen geschwenkt. Sobald dabei die Steigung der Flügelsegmente 36, 37 größer wird als der Schüttkegelwinkel α von auf dem Flügel 33 zurückgebliebenem Korn 15, gleitet das Korn 15 komplett in den Korntank ab.

Um ein seitliches Entweichen von Korn zu verhindern, ist mit der Aufwärtsschwenkbewegung des gesamten Flügels 33 eine Schwenkbewegung von dessen zwei Segmenten 36, 37 gegeneinander und der Platten 39 gegen das äußere Segment 37 so koordiniert, dass die untere Kante der Platte 39 in Kontakt mit der Platte 38 bleibt. Diese Bewegung kann es erforderlich machen, dass die Flügel 34 über die in Fig. 2 gezeigte Stellung hinaus ausgeschwenkt werden, so dass, wenn ihre Steigung kleiner als der Schüttkegelwinkel wird, von den Flügeln 33 oder den Dreieckplatten 38, 39 abgerutschtes Korn auf ihnen liegen bleiben kann. Um dieses Korn komplett zu beseitigen, kann es erforderlich sein, die Flügel 33, 34 mehrmals ein- und auszuschwenken.

Wenn die Flügel 33, 34 frei von Korn sind und der Mähdrescher wieder straßenverkehrstauglich gemacht werden soll, werden die Platten 39 gegen die äußeren Segmente 37 geschwenkt, wie durch gestrichelte Linien in Fig. 2 dargestellt. Aus der daraus resultierenden Konfiguration kann die Erweiterungsvorrichtung 2 mit dem aus DE 10 2004 007 673 A1 bekannten Bewegungsablauf zusammengeklappt werden (wobei den in dieser Schrift beschriebenen vier plattenförmigen Aufsatzteilen die Flügel 34 und die inneren Segmente 36 entsprechen), so dass die Flügel 33, 34 flach ausgestreckt und miteinander überlappend auf der Öffnung des Rahmens 32 zu liegen kommen.

Eine zweite Ausgestaltung der erfindungsgemäßen Erweiterungsvorrichtung mit vier im ausgeschwenkten Zustand konkaven Flügeln 33 ist in Fig. 3 gezeigt. An den Ecken des Rahmens 32 angeordnete dreieckige Platten 38 sind an zwei ihrer Kanten über Scharniere mit inneren Segmenten 36 der zwei jeweils benachbarten Flügel 33 verbunden. Trapezförmige Platten 40 haben jeweils eine über ein Scharnier mit einem der äußeren Segmente 37 verbundene Kante und zwei Kanten, die korndicht eine der Dreieckplatten 38 sowie ein jeweils benachbartes äußeres Segment 37 berühren.

Diese Erweiterungsvorrichtung 2 ist zusammenlegbar über ein in Fig. 4 gezeigtes Zwischenstadium. Zwei sich gegenüberliegende innere Segmente 36 sind um ihre an dem Rahmen 32 angelenkte Kante nach oben und nach innen in eine zum äußeren Segment 37 desselben Flügels 33 koplanare Stellung geschwenkt. In dieser Stellung werden die an die äußeren Segmente 37 angelenkten trapezförmigen Platten 40 in eine als gestrichelter Umriss gezeichnete Stellung geschwenkt, in der sie an den sie tragenden Flügeln 33 flach anliegen. Wenn diese Flügel 33 flach über die Öffnung des Rahmens 32 geschwenkt sind, können auch die beiden anderen Flügel 33 über die Rahmenöffnung geklappt und darauf flachgelegt werden.

Um bei einer Entleerung des Korntankes 3 die Flügel 33 der Erweiterungsvorrichtung 2 schnell von Korn zu befreien, können diverse Typen von Hilfsmitteln vorgesehen sein, von denen einige im Folgenden anhand der Figuren 6 bis 10 erläutert werden. Diese zeigen wie Fig. 5 jeweils einen Halbschnitt durch die Erweiterungsvorrichtung 2 entlang einer vertikalen Schnittebene. So sind gemäß der Ausgestaltung der Fig. 6 auf den Segmenten 36, 37 der Flügel 33 aufliegende Hilfsplatten 41, 42 vorgesehen, von denen die eine 41 um die innere Kante 43 des Flügels und die andere 42 um dessen äußere Kante 44 schwenkbar ist. Die Hilfsplatten 41, 42 überlappen geringfügig entlang der Linie 35. Wenn die untere Hilfsplatte 41 aufwärts geschwenkt wird, wie in der Fig. durch gestrichelte Linien dargestellt, nimmt sie die äußere 42 mit, und eine beim Entleeren des Tankes 3 auf dem Flügel 33 zurückgebliebene Menge an Korn 15 gerät in Richtung des Tankes 3 ins Rutschen. Indem wenn nötig die Schwenkbewegung der Hilfsplatten 41, 42 mehrmals wiederholt wird, kann das Korn 15 von dem Flügel 33 komplett beseitigt werden.

Eine ähnliche Wirkung wie mit den Hilfsplatten 41 ist mit Hilfe einer flexiblen Membran 45 zu erreichen, die, wie in Fig. 7 gezeigt, entlang der Kanten 43, 44 an dem Flügel 33 befestigt ist und zwischen den Kanten lose aufliegt, so dass ein normalerweise geschlossener Zwischenraum 46 zwischen ihr und dem Flügel 35 mit Druckluft beaufschlagbar ist. Wenn durch Druckluftzufuhr zum Zwischenraum 46 die Membran 45 von dem Flügel 33 abgehoben wird, gerät auf der Membran 45 ruhendes Korn 15 ins Rutschen und gleitet in den Korntank 3 ab.

Die Membran kann in Form eines Schlauches realisiert sein, von dem eine Seite z.B. durch Klebung an der Innenfläche des Flügels befestigt ist und eine andere Seite durch Druckluftzufuhr von der Innenfläche abspreizbar ist.

Bei der Ausgestaltung der Fig. 8 sind Druckluftleitungen 47 durch die Flügel 33 geführt, die auf Austrittsöffnungen 48 an der Innenseite der Flügel 33 münden. Indem durch diese Öffnungen 48 Druckluft in auf den Flügeln 33 ruhendes Korn 15 geblasen wird, wird das Korn 15 fluidisiert und strömt auch bei minimalem Gefälle des Segmentes 36 zuverlässig in den Korntank. Die Konzepte der Figuren 7 und 8 können kombiniert werden, indem in der Membran 45 Druckluftaustrittsöffnungen zum Fluidisieren von auf der Membran zurückgebliebenem Korn gebildet sind.

Auch bei der Variante der Fig. 9 ist die Innenfläche des Flügels 33 mit einer an den Kanten 43, 44 befestigten flexiblen Membran 45 bedeckt. Anstatt durch Druckluft ist diese Membran 45 durch an verschiedenen Stellen von ihr angreifende Zugseile 49 von der Innenfläche des Flügels 33 abhebbar. Wenn die Zugseile 49 sukzessive, von außen bzw. oben nach innen bzw. unten fortschreitend straffgezogen werden, ist es möglich, in einem einzigen Durchgang den Flügel 33 komplett von Korn zu befreien.

Auch die Ausgestaltung der Fig. 10 verwendet eine auf der Innenfläche des Flügels 33 aufliegende und an der inneren Kante 43 des Flügels befestigte Membran 45. Eine Zugvorrichtung 50 greift an einer äußeren oberen Kante der Membran 45 an. Wenn die Zugvorrichtung 50 die Membran 45 strafft, nimmt diese einen in Fig. 10 gestrichelt dargestellten Verlauf an, das auf dem Flügel 33 liegende Korn 15 in den Tank 3 abrutscht.

## Patentansprüche

1. Erweiterungsvorrichtung für einen Korntank, mit einem Rahmen (32) und einer Mehrzahl von an dem Rahmen (32) angelenkten, ausschwenkbaren und in einer ausgeschwenkten Stellung einen Innenraum (31) der Erweiterungsvorrichtung begrenzenden Flügeln (33, 34), wobei die dem Innenraum (31) zugewandte Innenfläche (28) wenigstens eines der Flügel (33) in der ausgeschwenkten Stellung eine konkave Gestalt hat, **dadurch gekennzeichnet, dass** die Flügel (33, 34) an die oberen Kanten von vertikalen Wänden des Rahmens (32) angelenkt sind, so dass durch Schwenken der Flügel die Erweiterungsvorrichtung vollständig entleerbar ist, und zwei entlang einer Linie (35) gelenkig verbundene Segmente, ein inneres in der ausgeschwenkten Stellung in etwa horizontales Segment (36) und ein äußeres Segment (37), umfassen, die an der Linie im Querschnitt einen stumpfen Winkel aufspannen, um eine konkave Innenfläche des Flügels zu bilden.

2. Erweiterungsvorrichtung nach Anspruch 1, **dadurch gekennzeichnet, dass** die Neigung der Innenfläche (28) des Flügels (33) in der ausgeschwenkten Stellung lokal niedriger ist als der Schüttkegelwinkel des Korns.

3. Erweiterungsvorrichtung nach Anspruch 1, **dadurch gekennzeichnet, dass** die Innenfläche (28) des Flügels (33) in der ausgeschwenkten Stellung lokal (36) horizontal ausgerichtet ist.

4. Erweiterungsvorrichtung nach einem der vorhergehenden Ansprüche, **dadurch gekennzeichnet, dass** die konkave Gestalt der Innenfläche (28) durch zwei in der ausgeschwenkten Stellung stumpfwinklig aufeinandertreffende Segmente (36, 37) des Flügels (33) gebildet ist.

5. Erweiterungsvorrichtung nach einem der vorhergehenden Ansprüche, **dadurch gekennzeichnet, dass** der Flügel (33) schwenkbar verbundene Segmente (36, 37) umfasst.

6. Erweiterungsvorrichtung für einen Korntank, mit einem Rahmen (32) und einer Mehrzahl von an dem Rahmen (32) angelenkten, ausschwenkbaren und in einer ausgeschwenkten Stellung einen Innenraum (31) der Erweiterungsvorrichtung begrenzenden Flügeln (33, 34), wobei die dem Innenraum (31) zugewandte Innenfläche (28) wenigstens eines der Flügel (33) in der ausgeschwenkten Stellung eine konkave Gestalt hat, **dadurch gekennzeichnet, dass** in der ausgeschwenkten Stellung eine flexible Membran (45) zwischen einer an der Innenfläche (28) des Flügels (33) anliegenden Stellung und einer abgehobenen Stellung bewegbar ist.

7. Erweiterungsvorrichtung nach Anspruch 6, **gekennzeichnet durch** ein an der Membran (45) angreifendes Zugmittel (50) zum Straffziehen der Membran (45).

8. Erweiterungsvorrichtung nach Anspruch 6, **dadurch gekennzeichnet, dass** ein Zwischenraum (46) zwischen der Innenfläche (28) des Flügels (33) und der Membran (45) mit Druckgas beaufschlagbar ist.

9. Erweiterungsvorrichtung nach einem der vorhergehenden Ansprüche, **dadurch gekennzeichnet, dass** an dem Flügel (33) Mittel (46, 47) zum Fluidisieren des Schüttguts angeordnet sind.

10. Erweiterungsvorrichtung nach einem der vorhergehenden Ansprüche, **dadurch gekennzeichnet, dass** an der Innenfläche (28) Austrittsöffnungen (47) für ein Druckgas verteilt sind.

11. Erweiterungsvorrichtung nach einem der vorhergehenden Ansprüche, **dadurch gekennzeichnet, dass** an der Innenfläche (28) wenigstens eine getrennt von dem Flügel (33) schwenkbare Platte (41, 42) angebracht ist.

## Claims

1. Extension device for a grain container, with a frame (32) and a plurality of pivotable panels (33, 34) hinged to the frame (32) which, when in a folded-out position, define an inner space (31) of the extension device, whereby the inner surface (28) of at least one of the panels (33) facing the inner space (31) has a concave form in the folded-out position, **characterised in that** the panels (33, 34) are hinged along the upper edges of vertical walls of the frame (32), so that by pivoting the panels the extension device can be completely emptied, and two segments which are hinged together along a line (35) comprise an inner segment (36) and an outer segment (37) which in cross section subtend an obtuse angle along the line in order to form a concave inner surface of the panel.

2. Extension device according to claim 1, **characterised in that** the inclination of the inner surface (28) of the panel (33) in the folded-out position is locally less than the angle of repose of the grain.

3. Extension device according to claim 1, **characterised in that** the inner surface (28) of the panel (33) in the folded-out position is locally (36) aligned horizontally.

4. Extension device according to one of the preceding claims, **characterised in that** the concave form of the inner surface (28) is formed by two segments (36, 37) of the panel (33) which meet at an obtuse angle in the folded-out position.

5. Extension device according to one of the preceding claims, **characterised in that** the panel (33) comprises hinged segments (36, 37).

6. Extension device for a grain container, with a frame (32) and a plurality of pivotable panels (33, 34) hinged to the frame (32) which, when in a folded-out position, define an inner space (31) of the extension apparatus, whereby the inner surface (28) facing the inner space (31) of at least one of the panels (33) has a concave form in the folded-out position, **characterised in that**, in the folded-out position, a flexible membrane (45) can be moved between a position in which it lies against the inner surface (28) of the panel (33) and a raised position.

7. Extension device according to claim 6, **characterised by** a tensioning device (50) which engages with the membrane (45) in order to pull the membrane (45) tight.

8. Extension device according to claim 6, **characterised in that** compressed gas can be applied to an intermediate space (46) between the inner surface (28) of the panel (33) and the membrane (45).

9. Extension device according to one of the preceding claims, **characterised in that** means (46, 47) for fluidising the bulk goods are arranged on the panel (33).

10. Extension device according to one of the preceding claims, **characterised in that** outlet openings (47) for a compressed gas are distributed over the inner surface (28).

11. Extension device according to one of the preceding claims, **characterised in that** at least one plate (41, 42) which can be pivoted independently of the panel (33) is attached to the inner surface (28).

## Revendications

1. Dispositif d'agrandissement pour un récipient à grain, avec un cadre (32) et une pluralité de panneaux pivotables (33, 34) fixés par des charnières au cadre (32) qui, lorsqu'ils sont dans une position dépliée, définissent un espace intérieur (31) du dispositif d'agrandissement, par quoi la surface intérieure (28) d'au moins un des panneaux (33) tournée vers l'espace intérieur (31) a une forme concave dans la position dépliée, **caractérisé en ce que** les panneaux (33, 34) sont fixés par des charnières le long des bords supérieurs des parois verticales du cadre (32), de sorte qu'en faisant pivoter les panneaux, le dispositif d'agrandissement puisse être complètement vidé, et deux segments qui sont fixés ensemble par des charnières suivant une ligne (35) comportent un segment intérieur (36) et un segment extérieur (37) qui, en coupe transversale, sous-tendent un angle obtus suivant la ligne afin de former une surface intérieure concave du panneau.

2. Dispositif d'agrandissement selon la revendication 1, **caractérisé en ce que** l'inclinaison de la surface intérieure (28) du panneau (33) dans la position dépliée est localement inférieure à l'angle de repos du grain.

3. Dispositif d'agrandissement selon la revendication 1, **caractérisé en ce que** la surface intérieure (28) du panneau (33) dans la position dépliée est localement (36) alignée horizontalement.

4. Dispositif d'agrandissement selon l'une des revendications précédentes, **caractérisé en ce que** la forme concave de la surface intérieure (28) est formée par deux segments (36, 37) du panneau (33) qui se rencontrent pour former un angle obtus dans la position dépliée.

5. Dispositif d'agrandissement selon l'une des revendications précédentes, **caractérisé en ce que** le panneau (33) comporte des segments fixés par des charnières (36, 37).

6. Dispositif d'agrandissement pour un récipient à grain, avec un cadre (32) et une pluralité de panneaux pivotables (33, 34) fixés par des charnières au cadre (32) qui, lorsqu'ils sont dans une position dépliée, définissent un espace intérieur (31) du dispositif d'agrandissement, par quoi la surface intérieure (28) tournée vers l'espace intérieur (31) d'au moins un des panneaux (33) a une forme concave dans la position dépliée, **caractérisé en ce que**, dans la position dépliée, une membrane flexible (45) peut être déplacée entre une position dans laquelle elle se trouve contre la surface intérieure (28) du panneau (33) et une position relevée.

7. Dispositif d'agrandissement selon la revendication 6, **caractérisé par** un dispositif de tensionnement (50) qui s'engage avec la membrane (45) afin de serrer la membrane (45).

8. Dispositif d'agrandissement selon la revendication 6, **caractérisé en ce que** du gaz comprimé peut être appliqué à un espace intermédiaire (46) entre la surface intérieure (28) du panneau (33) et la membrane (45).

9. Dispositif d'agrandissement selon l'une des revendications précédentes, **caractérisé en ce que** des moyens (46, 47) pour fluidiser les matières en vrac sont disposés sur le panneau (33).

10. Dispositif d'agrandissement selon l'une des revendications précédentes, **caractérisé en ce que** les ouvertures de sortie (47) pour un gaz comprimé sont réparties sur la surface intérieure (28).

11. Dispositif d'agrandissement selon l'une des revendications précédentes, **caractérisé en ce qu'**au moins une plaque (41, 42) que l'on peut faire pivoter indépendamment du panneau (33) est attachée à la surface intérieure (28).
